# EUROPEAN PATENT APPLICATION

(11) **EP 3 672 203 A1**
(43) Date of publication of application: **24.06.2020**
(21) Application number: 18846782.3
(22) Date of filing: 15.08.2018
(51) Int. Cl.: H04L 29/08

(54) **DISTRIBUTION METHOD FOR DISTRIBUTED DATA COMPUTING, DEVICE, SERVER AND STORAGE MEDIUM**

(30) Priority: 15.08.2017 CN 201710697377
(71) Applicant: ZTE Corporation, Shenzhen, Guangdong 518057 (CN)
(72) Inventor: FAN, Shutian, Shenzhen Guangdong 518057 (CN); DING, Bai, Shenzhen Guangdong 518057 (CN); ZHU, Jianxun, Shenzhen Guangdong 518057 (CN); LIU, Wanhui, Shenzhen Guangdong 518057 (CN)
(74) Representative: Baudler, Ron
(86) International application number: PCT/CN2018/100696
(87) International publication number: WO 2019/034091

(57) **Abstract**

Provided by embodiments of the present disclosure are an allocation method and device for distributed data computing, a server and a computer storage medium, the method including: receiving distribution node matching information sent from a preposed node server and corresponding to a computing service request; selecting addresses of at least two distribution node servers capable of implementing the computing service request according to the distribution node matching information; selecting a target distribution node server address from the addresses of the at least two distribution node servers according to a preset selection principle; and sending the target distribution node server address to the preposed node server.

## Description

### TECHNICAL FIELD

The present disclosure relates to, but is not limited to, the field of communication technologies.

### BACKGROUND

Due to the fact that massive data are processed in a communication system, a distributed network, i.e., a network system provided with multiple distribution node servers in a same layer, is proposed in order to solve a problem that a server is overloaded and cannot respond to a corresponding computing service request in time because of the massive data processed on the server. For example, in a Software Defined Network (SDN) system, a distribution node server is often used for computing to effectively process massive concurrent data. However, each computing service request corresponds to a fixed distribution node server, and as a result, once the computing service request sent from a user terminal is determined, a fixed and unique distribution node server in the network system is allocated to the computing service request. For a certain computing service request, the distribution node server allocated thereto by the network system is not expandable, and no alternative is available. In some cases, the distribution node server corresponding to the computing service request may be not in a good working condition, but since there is only one distribution node server corresponding to the computing service request, the network system can only allocate this unique distribution node server to the computing service request. Therefore, the distribution node server may not respond to the current computing service request successfully in time.

### SUMMARY

In an embodiment of the present disclosure, there is provided an allocation method for distributed data computing, including: receiving distribution node matching information sent from a preposed node server and corresponding to a computing service request; selecting addresses of at least two distribution node servers capable of implementing the computing service request according to the distribution node matching information; selecting a target distribution node server address from the addresses of the at least two distribution node servers according to a preset selection principle; and sending the target distribution node server address to the preposed node server.

In an embodiment of the present disclosure, there is further provided an allocation method for distributed data computing, including: receiving a computing service request sent from a client; determining distribution node matching information corresponding to the computing service request and sending the same to a policy management server; receiving a target distribution node server address sent from the policy management server, where the policy management server selects the target distribution node server address from addresses of at least two distribution node servers capable of implementing the computing service request according to a preset selection principle, and the addresses of the at least two distribution node servers are obtained by the policy management server selecting according to the distribution node matching information; and releasing a computing task to a target distribution node server corresponding to the target distribution node server address.

In an embodiment of the present disclosure, there is further provided an allocation device for distributed data computing, including: a matching information receiving module configured to receive distribution node matching information sent from a preposed node server and corresponding to a computing service request; a first address selection module configured to select addresses of at least two distribution node servers capable of implementing the computing service request according to the distribution node matching information; a second address selection module configured to select a target distribution node server address from the addresses of the at least two distribution node servers according to a preset selection principle; and an address delivery module configured to send the target distribution node server address to the preposed node server.

In an embodiment of the present disclosure, there is further provided an allocation device for distributed data computing, including: a service request receiving module configured to receive a computing service request sent from a client; a matching information determination module configured to determine distribution node matching information corresponding to the computing service request and send the same to a policy management server; an address receiving module configured to receive a target distribution node server address sent from the policy management server, where the policy management server selects the target distribution node server address from addresses of at least two distribution node servers capable of implementing the computing service request according to a preset selection principle, and the addresses of the at least two distribution node servers are obtained by the policy management server selecting according to the distribution node matching information; and a computing task releasing module configured to release a computing task to a target distribution node server corresponding to the target distribution node server address.

In an embodiment of the present disclosure, there is further provided a policy management server including a processor, a memory and a communication bus, where the communication bus is configured to enable connective communication between the processor and the memory, and the processor is configured to execute one or more programs stored in the memory to implement the allocation method for distributed data computing according to the present disclosure.

In an embodiment of the present disclosure, there is further provided a preposed node server, including a processor, a memory and a communication bus, where the communication bus is configured to enable connective communication between the processor and the memory, and the processor is configured to execute one or more programs stored in the memory to implement the allocation method for distributed data computing according to the present disclosure.

In an embodiment of the present disclosure, there is further provided a computer storage medium having one or more programs stored thereon which, when executed by one or more processors, cause the one or more processors to implement the allocation method for distributed data computing according to the present disclosure.

### BRIEF DESCRIPTION OF THE DRAWINGS

Accompanying drawings are provided for further understanding of the embodiments of the disclosure and constitute a part of the specification. Hereinafter, these drawings are intended to explain the disclosure together with the following embodiments, but should not be considered as a limitation to the disclosure. In the drawings:
FIG 1 is a schematic flowchart of an allocation method for distributed data computing according to an embodiment of the present disclosure;
FIG. 2 is a schematic flowchart illustrating step S102 in the allocation method for distributed data computing of FIG. 1 according to an embodiment of the present disclosure;
FIG. 3 is another schematic flowchart illustrating step S102 in the allocation method for distributed data computing of FIG. 1 according to an embodiment of the present disclosure;
FIG. 4 is a schematic flowchart illustrating step S103 in the allocation method for distributed data computing of FIG. 1 according to an embodiment of the present disclosure;
FIG. 5 is a schematic flowchart of an allocation method for distributed data computing according to another embodiment of the present disclosure;
FIG. 6 is a schematic structural diagram of an allocation device for distributed data computing according to an embodiment of the present disclosure;
FIG. 7 is a schematic structural diagram of an allocation device for distributed data computing according to another embodiment of the present disclosure;
FIG. 8 is a schematic structural diagram of a policy management server according to an embodiment of the present disclosure;
FIG. 9 is a schematic structural diagram of a preposed node server according to an embodiment of the present disclosure; and
FIG. 10 is a schematic structural diagram of a distributed data computing system according to an embodiment of the present disclosure.

### DETAILED DESCRIPTION

For clarity and better understanding of the objects, technical solutions and advantages of the present disclosure, embodiments of the present disclosure will be described in further detail with reference to the following detailed description and accompanying drawings. It will be appreciated that the specific embodiments described herein are merely for illustration of the present disclosure and are not intended to limit the present disclosure.

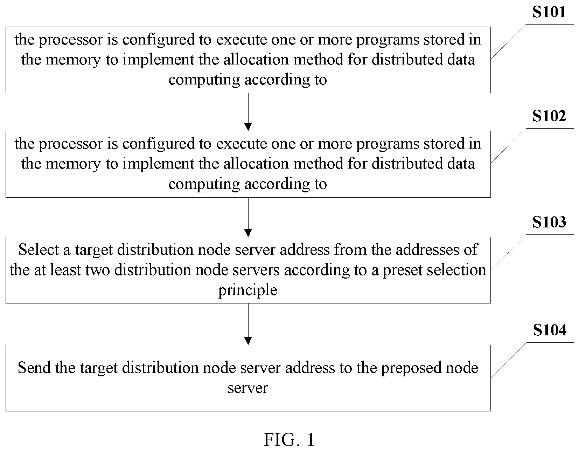

FIG. 1 is a schematic flowchart of an allocation method for distributed data computing according to an embodiment of the present disclosure.

As shown in FIG. 1, the allocation method for distributed data computing according to the embodiment of the present disclosure may be applied to a policy management server, and the method may include steps S101 to S104.

At step S101, distribution node matching information sent from a preposed node server and corresponding to a computing service request is received.

According to an embodiment of the present disclosure, the preposed node server may be a server in a network system that provides a service interface to the outside. The service interface of the preposed node server may be defined service-oriented. For example, the service interface may be a web service interface, a Simple Object Access Protocol (SOAP) interface, or another type of remote procedure call (RPC) protocol interface, or the like.

The preposed node server may receive a computing service request sent from a client via the service interface, and may collect distribution node matching information corresponding to the computing service request after receiving the computing service request.

It will be appreciated that the service computing request may be any request sent from the client, for example, an access network request, a call request, an application download request, and the like.

According to an embodiment of the present disclosure, the distribution node matching information may include a computing service type, as well as addresses of at least two distribution node servers currently used to implement the computing service type, which will be described in detail below.

At step S102, addresses of at least two distribution node servers capable of implementing the computing service request are selected according to the distribution node matching information.

Under a condition that the distribution node matching information includes the computing service type, the preposed node server, upon receiving a computing service request from a client, judges a type of the computing service request and thus determines the computing service type. It will be appreciated that the preposed node server may store codes for determining the type of the computing service request. Upon receiving the computing service request, the preposed node server may execute corresponding codes to determine the computing service type, and send, after determining the computing service type, the determination result to a policy management server.

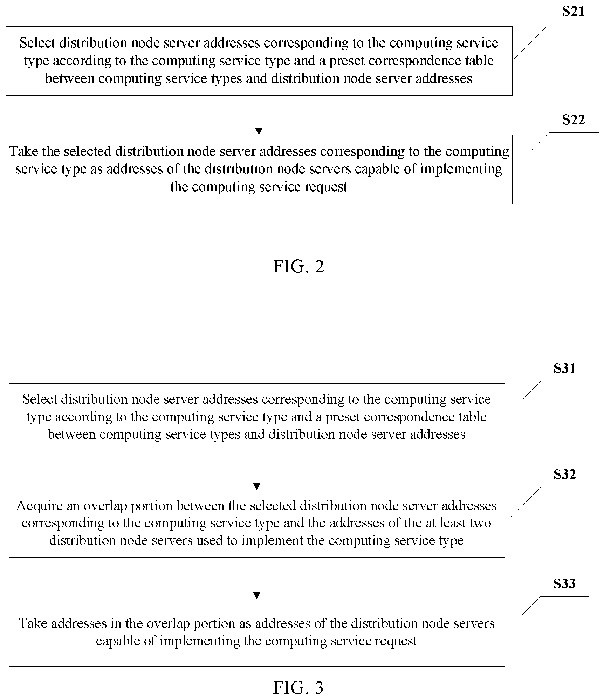

FIG. 2 is a schematic flowchart illustrating step S102 in the allocation method for distributed data computing of FIG. 1 according to an embodiment of the present disclosure.

Referring to FIG. 2, under a condition that the distribution node matching information includes the computing service type, step S102 may include the following sub-steps S21 to S22.

At sub-step S21, distribution node server addresses corresponding to the computing service type are selected according to the computing service type and a preset correspondence table between computing service types and distribution node server addresses.

According to an embodiment of the present disclosure, each computing service type corresponds to addresses of at least two distribution node servers.

The computing service type may be classified according to the functionality that the computing service request can perform, such as being classified into call computing service requests, download computing service requests, and so on. The preset correspondence table between the computing service types and the distribution node server addresses may include a correspondence relationship between the call computing service requests and the distribution node server addresses, and a correspondence relationship between the download computing service requests and the distribution node server addresses. It should be noted that either a call computing service request or a download computing service request corresponds to addresses of at least two distribution node servers. In this manner, the distribution node servers may be flexibly allocated to the computing service request according to different situations in actual use.

It will be appreciated that the preset correspondence table between the computing service types and the distribution node server addresses represents a correspondence relationship between each computing service type and distribution node servers capable of implementing the computing service type. For example, the call computing service request corresponds to four distribution node servers, i.e., a distribution node server A, a distribution node server B, a distribution node server C, and a distribution node server D, and data for implementing the call computing service request is stored in each of the four distribution node servers so that cross-point access to data can be reduced. In addition, in order to save occupation of a resource memory, the data may be not stored in other distribution node servers.

In some embodiments, the data stored in each distribution node server may be the same, and thus a developer may set the correspondence relationship in the correspondence table between the computing service types and the distribution node server addresses according to various situations in actual use. For example, an urban area may have a greater number of call computing service requests than a rural area, and thus a distribution node server disposed in a densely populated urban area may be used as a server corresponding to the call computing service requests.

At sub-step S22, the selected distribution node server addresses corresponding to the computing service type are taken as addresses of the distribution node servers capable of implementing the computing service request.

For example, in the above example, in a case that the type of the received computing service request is the call computing service request, addresses of four distribution node servers (i.e., the distribution node server A, the distribution node server B, the distribution node server C and the distribution node server D) may be selected and taken as addresses of the distribution node servers capable of implementing the computing service request.

Under a condition that the distribution node matching information includes the computing service type and addresses of at least two distribution node servers currently used to implement the computing service type, the preposed node server, upon receiving a computing service request from a client, judges a type of the computing service request and thus determines the computing service type. In addition, after receiving the computing service request sent from the client, the preposed node server further judges call parameters of the computing service request, and thus determines the addresses of the at least two distribution node servers used to implement the computing service type. It should be noted that the type of the computing service request may be further divided into a plurality of different sub-types, and each sub-type may be implemented by the distribution node server in a different method. For example, the download computing service request may be divided into sub-types such as image download computing service requests, music download computing service requests, and the like, and the distribution node server may implement the image download computing service request and the music download computing service request in different methods, i.e., corresponding to different call parameters. The preposed node server may store a correspondence relationship between call parameters of computing service types and the distribution node server addresses, and each computing service type may include a plurality of different call parameters each corresponding to addresses of at least two distribution node servers. Therefore, for a certain computing service type, the distribution node server addresses corresponding to the computing service type include addresses of all distribution node servers corresponding to all call parameters associated with the computing service type.

It should be noted that the correspondence relationship between the call parameters of the computing service types and the distribution node server addresses may also be stored in an upper server, such as a cluster management server. The cluster management server may perform unified management and monitoring on the respective distribution node servers. The preposed node server may, after receiving the computing service request, send the computing service request to the cluster management server. The cluster management server may determine the call parameters corresponding to the computing service request according to preset codes, and then send the addresses of the at least two distribution node servers used to implement the computing service type to the preposed node server. In addition, the correspondence relationship between the call parameters of the computing service types and the distribution node server addresses may also be stored in a policy management server, which is not repeated here.

FIG. 3 is another schematic flowchart illustrating step S102 in the allocation method for distributed data computing of FIG. 1 according to an embodiment of the present disclosure.

Referring to FIG. 3, under a condition that the distribution node matching information includes the computing service type and addresses of at least two distribution node servers currently used to implement the computing service type, step S102 may include the following sub-steps S31 to S33.

At sub-step S31, distribution node server addresses corresponding to the computing service type are selected according to the computing service type and a preset correspondence table between computing service types and distribution node server addresses.

At sub-step S32, an overlap portion between the selected distribution node server addresses corresponding to the computing service type and the addresses of the at least two distribution node servers used to implement the computing service type is obtained.

At sub-step S33, addresses in the overlap portion are taken as the addresses of the distribution node servers capable of implementing the computing service request.

Here, a description is given taking a download computing service request as an example. Since the preposed node server stores codes for determining a type of the computing service request, after receiving the computing service request, the preposed node server may determine the computing service type to be a download computing service request by executing the codes.

The policy management server may, after receiving the download computing service request, determine distribution node server addresses corresponding to the download computing service request.

In addition, the preposed node server also stores codes for judging call parameters of the computing service type. Therefore, after receiving the computing service request, the preposed node server may determine a method for implementing the computing service request (i.e., determining the call parameters), and then determine addresses of the distribution node servers for implementing the computing service type according to the correspondence relationship between the call parameters of the computing service types and the distribution node server addresses.

It will be appreciated that sub-step S31 corresponds to a first selection of the distribution node servers according to the type of the computing service request. Since specific functions (i.e., call parameters) may be different for the same computing service type, the corresponding implementations are different. Call parameters are parameters related to service implementation, and therefore the number of addresses selected in sub-step S31 is often more than that of the addresses of the at least two distribution node servers for implementing a specific function of the computing service type.

For example, the distribution node servers corresponding to the download computing service request may include a distribution node server E, a distribution node server F, a distribution node server G, and a distribution node server H, while the distribution node servers corresponding to the music download computing service request (i.e., specific call parameters) may include the distribution node server G and the distribution node server H. Therefore, the addresses of the overlap portion obtained in sub-steps S31 and S32 are addresses of the distribution node server G and the distribution node server H. Therefore, the addresses of the distribution node server G and the distribution node server H may be taken as addresses of the distribution node servers capable of implementing the computing service request.

Returning to FIG. 1, at step S103, a target distribution node server address is selected from the addresses of the distribution node servers according to a preset selection principle.

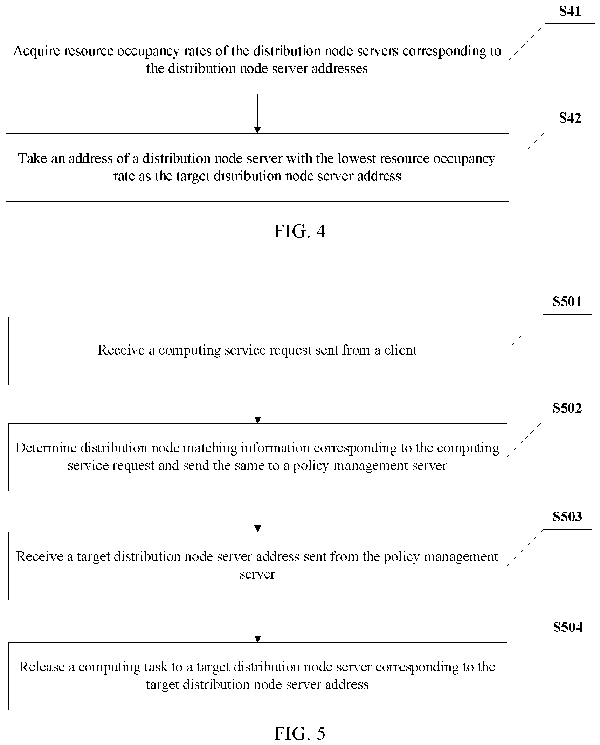

FIG. 4 is a schematic flowchart illustrating step S103 in the allocation method for distributed data computing of FIG. 1 according to an embodiment of the present disclosure.

Referring to FIG. 4, step S103 may include the following sub-steps S41 to S42.

At sub-step S41, resource occupancy rates of the distribution node servers corresponding to the distribution node server addresses is acquired.

It should be noted that for sub-step S41, the policy management server may acquire, from the cluster management server, the resource occupancy rates of the distribution node servers corresponding to the distribution node server addresses selected in step S102. The cluster management server may monitor work conditions of all the distribution node servers in real time and send the monitoring results to the policy management server in real time. Alternatively, the policy management server may actively send a request for acquiring the monitoring results to the cluster management server.

At sub-step S42, an address of a distribution node server with the lowest resource occupancy rate is taken as the target distribution node server address.

It will be appreciated that in some embodiments, the policy management server may acquire, from the cluster management server, distribution node servers satisfying a preset condition first, and then make a selection from the distribution node servers satisfying the preset condition according the received distribution node matching information. The preset condition may be set arbitrarily, for example, a resource occupancy rate less than or equal to a preset threshold.

Taking the distribution node server with the lowest resource occupancy rate as the target distribution node server can realize load balance on the respective distribution node servers while meeting demands of the computing service to the most. Further, a distribution node server with the most stable network performance may be selected as the target distribution node server, or a distribution node server corresponding to a communication channel with the best quality may be selected as the target distribution node server.

At step S104, the target distribution node server address is sent to the preposed node server.

After receiving the target distribution node server address sent from the policy management server, the preposed node server may release a computing task to the corresponding target distribution node server.

FIG. 5 is a schematic flowchart of an allocation method for distributed data computing according to another embodiment of the present disclosure.

As shown in FIG. 5, the allocation method for distributed data computing according to the embodiment of the present disclosure may be applied to a preposed node server, and the method may include steps S501 to S504.

At step S501, a computing service request sent from a client is received.

At step S502, distribution node matching information corresponding to the computing service request is determined and sent to a policy management server.

It will be appreciated that before step S502, the computing service request may be authenticated, and step S502 is performed when it is confirmed that the client sending the computing service request satisfies a preset identity condition.

At step S503, a target distribution node server address sent from the policy management server is received. The policy management server may select the target distribution node server address from addresses of at least two distribution node servers capable of implementing the computing service request according to a preset selection principle, and the addresses of the at least two distribution node servers are obtained by the policy management server selecting according to the distribution node matching information.

At step S504, a computing task is released to a target distribution node server corresponding to the target distribution node server address.

In an embodiment of the present disclosure, there is further provided a computer storage medium having one or more programs stored thereon which, when executed by one or more processors, may cause the one or more processors to implement the allocation method for distributed data computing according to the above embodiments.

According to the method and the computer storage medium disclosed by the embodiments of the disclosure, a plurality of distribution node server addresses is screened out according to the distribution node matching information, and thus the network system can flexibly allocate the distribution node servers to the computing service request. Therefore, even if one of the distribution node servers fails, the network system can still select other distribution node servers from the screened out distribution node servers to respond to the computing service request, thereby increasing the flexibility and improving the stability and the expandability of the network system.

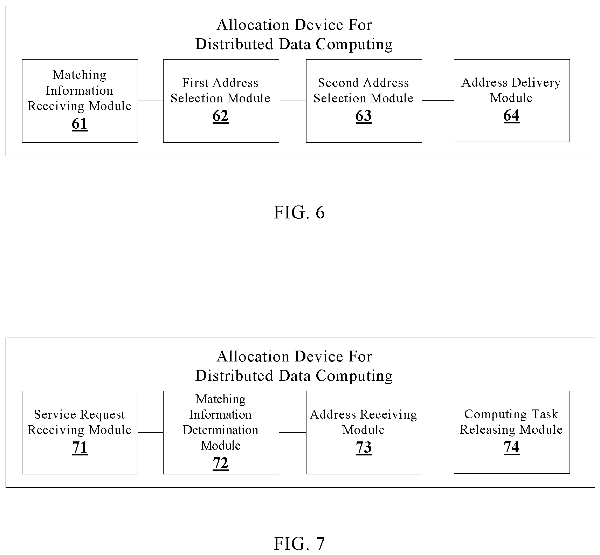

FIG. 6 is a schematic structural diagram of an allocation device for distributed data computing according to an embodiment of the present disclosure.

Referring to FIG. 6, the allocation device for distributed data computing according to the embodiment of the present disclosure may be applied to a policy management server, and the device may include a matching information receiving module 61, a first address selection module 62, a second address selection module 63 and an address delivery module 64.

The matching information receiving module 61 is configured to receive distribution node matching information sent from a preposed node server and corresponding to a computing service request. The first address selection module 62 is configured to select addresses of at least two distribution node servers capable of implementing the computing service request according to the distribution node matching information. The second address selection module 63 is configured to select a target distribution node server address from the addresses of the at least two distribution node servers according to a preset selection principle. The address delivery module 64 is configured to send the target distribution node server address to the preposed node server.

According to an embodiment of the present disclosure, the distribution node matching information may include a computing service type, and the first address selection module 62 may be configured to select distribution node server addresses corresponding to the computing service type according to the computing service type and a preset correspondence table between computing service types and distribution node server addresses, and take the selected distribution node server addresses corresponding to the computing service type as addresses of the distribution node servers capable of implementing the computing service request. It will be appreciated that each computing service type corresponds to addresses of at least two distribution node servers.

According to an embodiment of the present disclosure, the distribution node matching information may include a computing service type and addresses of at least two distribution node servers used to implement the computing service type, and the first address selection module 62 may be configured to select distribution node server addresses corresponding to the computing service type according to the computing service type and a preset correspondence table between the computing service types and the distribution node server addresses, acquire an overlap portion between the selected distribution node server addresses corresponding to the computing service type and the addresses of the at least two distribution node servers used to implement the computing service type, and take addresses in the overlap portion as the addresses of the distribution node servers capable of implementing the computing service request.

According to an embodiment of the present disclosure, the second address selection module 63 may be configured to acquire resource occupancy rates of the distribution node servers corresponding to the distribution node server addresses, and take an address of a distribution node server with the lowest resource occupancy rate as the target distribution node server address.

FIG. 7 is a schematic structural diagram of an allocation device for distributed data computing according to another embodiment of the present disclosure.

Referring to FIG. 7, the allocation device for distributed data computing according to the embodiment of the present disclosure may be applied to a preposed node server, and the device may include a service request receiving module 71, a matching information determination module 72, an address receiving module 73 and a computing task releasing module 74.

The service request receiving module 71 is configured to receive a computing service request sent from a client. The matching information determination module 72 is configured to determine distribution node matching information corresponding to the computing service request and send the same to a policy management server. The address receiving module 73 is configured to receive a target distribution node server address sent from the policy management server. The policy management server selects the target distribution node server address from addresses of at least two distribution node servers capable of implementing the computing service request according to a preset selection principle, and the addresses of the at least two distribution node servers are obtained by the policy management server selecting according to the distribution node matching information. The computing task releasing module 74 is configured to release a computing task to a target distribution node server corresponding to the target distribution node server address.

It should be noted that in this embodiment, codes for implementing functions of all the modules described above may be stored in corresponding memories, and may be executed by processors in corresponding servers to implement the functions corresponding to the respective modules.

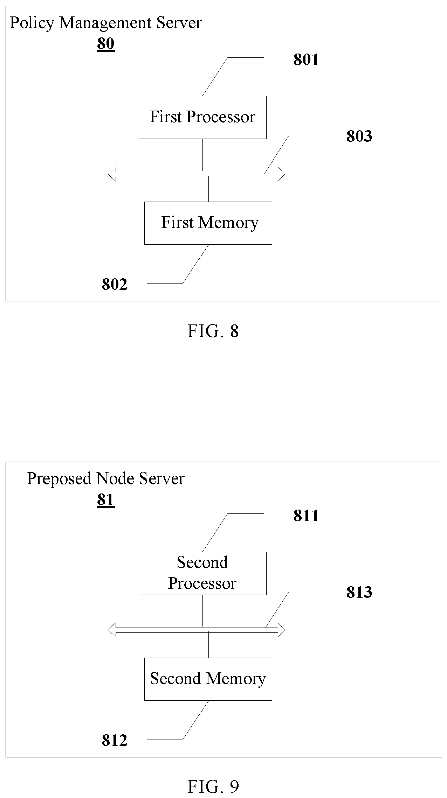

FIG. 8 is a schematic structural diagram of a policy management server according to an embodiment of the present disclosure.

Referring to FIG. 8, the policy management server 80 according to an embodiment of the present disclosure may include a first processor 801, a first memory 802, and a first communication bus 803. The first communication bus 803 is used to enable connective communication between the first processor 801 and the first memory 802. The first processor 801 may execute one or more programs stored in the first memory 802 to implement the allocation method for distributed data computing according to the embodiments of the present disclosure.

FIG. 9 is a schematic structural diagram of a preposed node server according to an embodiment of the present disclosure.

Referring to FIG. 9, the preposed node server 81 implemented according to an embodiment of the present disclosure may include a second processor 811, a second memory 812, and a second communication bus 813. The second communication bus 813 is used to enable connective communication between the second processor 811 and the second memory 812. The second processor 811 may execute one or more programs stored in the second memory 812 to implement the allocation method for distributed data computing according to the embodiments of the present disclosure.

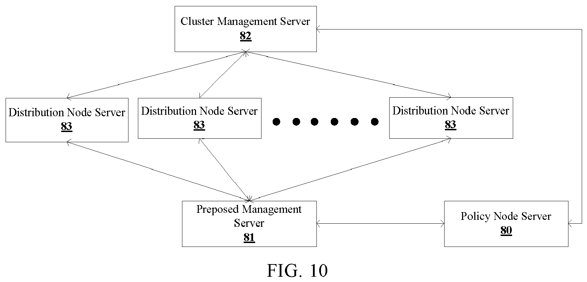

FIG. 10 is a schematic structural diagram of a distributed data computing system according to an embodiment of the present disclosure.

Referring to FIGs. 8-10, the distributed data computing system according to an embodiment of the present disclosure may include a cluster management server 82, distribution node servers 83, a preposed node server 81, and a policy management server 80.

The cluster management server 82 may monitor work conditions of the respective distribution node servers 83. Each of the distribution node servers 83 may register with the cluster management server 82 after startup, maintain a heartbeat with the cluster management server 82 during runtime and receive monitoring of the cluster management server 82. The preposed node server 81 may receive an externally transmitted computing service request, determine distribution node matching information corresponding to the computing service request, and then send the distribution node matching information to the policy management server 80. The policy management server 80 may select addresses of at least two distribution node servers 83 capable of implementing the computing service request according to the received distribution node matching information, select a target distribution node server address from the addresses of the at least two distribution node servers 83 based on a preset selection principle, and send the target distribution node server address to the preposed node server 81. The preposed node server 81 releases a computing task to a corresponding distribution node server 83 according to the received target distribution node server address. The target distribution node server 83, after receiving the delivered task, calls internal data thereof to perform corresponding computing and returns the computing result to the corresponding client via the preposed node server 81.

The policy management server 80 and the cluster management server 82 may be in communication with each other. For example, the cluster management server 82 may send the monitored working conditions and resource occupation statuses of the respective distribution node servers 83 to the policy management server 80. The policy management server 80 may select the target distribution node server 83 based on information related to the distribution node servers 83 sent from the cluster management server 82.

Those skilled in the art should appreciate that the respective modules and steps in the embodiments of the present disclosure may be realized by using a general-purpose computing device; they may be integrated in a single computing device, or may be distributed on a network that consists of a plurality of computing devices. Further, the various modules or steps may be implemented by a program code executable by a computing device so that they may be stored on a computer storage medium (an ROM/RAM, a magnetic disk, or an optical disk) and executed by the computing device, and in some cases, the steps shown or described may be performed in an order different than that described herein. Alternatively, the respective modules and steps may be implemented by being made into respective integrated circuit modules, or many or part of the modules or steps may be implemented by being made into a single integrated circuit module. In this way, the present disclosure is not limited to any particular hardware and software combination.

The above are further detailed explanation of the embodiments of the present disclosure in conjunction with specific embodiments, and the present disclosure is not to be construed as being limited to these embodiments. For those ordinary skilled in the art to which the present disclosure belongs, several simple modifications or substitutions can be made without departing from the concept of the present disclosure, which modifications and substitutions should also be considered as falling within the scope of the disclosure.

## Claims

1. An allocation method for distributed data computing, comprising:
receiving distribution node matching information sent from a preposed node server and corresponding to a computing service request;
selecting addresses of at least two distribution node servers capable of implementing the computing service request according to the distribution node matching information;
selecting a target distribution node server address from the addresses of the at least two distribution node servers according to a preset selection principle; and
sending the target distribution node server address to the preposed node server.

2. The allocation method for distributed data computing according to claim 1, wherein the distribution node matching information comprises a computing service type, and the step of selecting the addresses of the at least two distribution node servers capable of implementing the computing service request according to the distribution node matching information comprises:
selecting distribution node server addresses corresponding to the computing service type according to the computing service type and a preset correspondence table between computing service types and distribution node server addresses, wherein each computing service type corresponds to addresses of at least two distribution node servers; and
taking the selected distribution node server addresses corresponding to the computing service type as addresses of the distribution node servers capable of implementing the computing service request.

3. The allocation method for distributed data computing according to claim 1, wherein the distribution node matching information comprises a computing service type and addresses of at least two distribution node servers currently used to implement the computing service type, and the step of selecting the addresses of the at least two distribution node servers capable of implementing the computing service request according to the distribution node matching information comprises:
selecting distribution node server addresses corresponding to the computing service type according to the computing service type and a preset correspondence table between computing service types and distribution node server addresses;
acquiring an overlap portion between the selected distribution node server addresses corresponding to the computing service type and the addresses of the at least two distribution node servers used to implement the computing service type; and
taking addresses in the overlap portion as addresses of the distribution node servers capable of implementing the computing service request.

4. The allocation method for distributed data computing according to any one of claims 1 to 3, wherein the step of selecting the target distribution node server address from the addresses of the at least two distribution node servers according to the preset selection principle comprises:
acquiring resource occupancy rates of the distribution node servers corresponding to the distribution node server addresses; and
taking an address of a distribution node server with the lowest resource occupancy rate as the target distribution node server address.

5. An allocation method for distributed data computing, comprising:
receiving a computing service request sent from a client;
determining distribution node matching information corresponding to the computing service request and sending the same to a policy management server;
receiving a target distribution node server address sent from the policy management server, wherein the policy management server selects the target distribution node server address from addresses of at least two distribution node servers capable of implementing the computing service request according to a preset selection principle, and the addresses of the at least two distribution node servers are obtained by the policy management server selecting according to the distribution node matching information; and
releasing a computing task to a target distribution node server corresponding to the target distribution node server address.

6. An allocation device for distributed data computing, comprising:
a matching information receiving module configured to receive distribution node matching information sent from a preposed node server and corresponding to a computing service request;
a first address selection module configured to select addresses of at least two distribution node servers capable of implementing the computing service request according to the distribution node matching information;
a second address selection module configured to select a target distribution node server address from the addresses of the at least two distribution node servers according to a preset selection principle; and
an address delivery module configured to send the target distribution node server address to the preposed node server.

7. The allocation device for distributed data computing according to claim 6, wherein the distribution node matching information comprises a computing service type, and the first address selection module is configured to:
select distribution node server addresses corresponding to the computing service type according to the computing service type and a preset correspondence table between computing service types and distribution node server addresses, wherein each computing service type corresponds to addresses of at least two distribution node servers; and
take the selected distribution node server addresses corresponding to the computing service type as addresses of the distribution node servers capable of implementing the computing service request.

8. The allocation device for distributed data computing according to claim 6, wherein the distribution node matching information comprises a computing service type and addresses of at least two distribution node servers currently used to implement the computing service type, and the first address selection module is configured to:
select distribution node server addresses corresponding to the computing service type according to the computing service type and a preset correspondence table between computing service types and distribution node server addresses;
acquire an overlap portion between the selected distribution node server addresses corresponding to the computing service type and the addresses of the at least two distribution node servers used to implement the computing service type; and
take addresses in the overlap portion as addresses of the distribution node servers capable of implementing the computing service request.

9. The allocation device for distributed data computing according to any one of claims 6 to 8, wherein the second address selection module is configured to:
acquire resource occupancy rates of the distribution node servers corresponding to the distribution node server addresses; and
take an address of a distribution node server with the lowest resource occupancy rate as the target distribution node server address.

10. An allocation device for distributed data computing, comprising:
a service request receiving module configured to receive a computing service request sent from a client;
a matching information determination module configured to determine distribution node matching information corresponding to the computing service request and send the same to a policy management server;
an address receiving module configured to receive a target distribution node server address sent from the policy management server, wherein the policy management server selects the target distribution node server address from addresses of at least two distribution node servers capable of implementing the computing service request according to a preset selection principle, and the addresses of the at least two distribution node servers are obtained by the policy management server selecting according to the distribution node matching information; and
a computing task releasing module configured to release a computing task to a target distribution node server corresponding to the target distribution node server address.

11. A policy management server comprising a processor, a memory and a communication bus, wherein
the communication bus is configured to enable connective communication between the processor and the memory, and
the processor is configured to execute one or more programs stored in the memory to implement the allocation method for distributed data computing according to any one of claims 1 to 4.

12. A preposed node server, comprising a processor, a memory and a communication bus, wherein
the communication bus is configured to enable connective communication between the processor and the memory, and
the processor is configured to execute one or more programs stored in the memory to implement the allocation method for distributed data computing according to claim 5.

13. A computer storage medium having one or more programs stored thereon which, when executed by one or more processors, cause the one or more processors to implement the allocation method for distributed data computing according to any one of claims 1 to 5.
